Europäisches Patentamt

European Patent Office

Office européen des brevets

(11) Numéro de publication: **0 249 570 B1**

## FASCICULE DE BREVET EUROPEEN

(45) Date de publication de fascicule du brevet:
**12.06.91**

(51) Int. Cl.⁵: **A01M 7/00**

(21) Numéro de dépôt: **87420156.9**

(22) Date de dépôt: **12.06.87**

(54) Dispositif de suspension d'une rampe d'épandage de liquides phytosanitaires.

(30) Priorité: **13.06.86 FR 8608977**

(43) Date de publication de la demande:
**16.12.87 Bulletin 87/51**

(45) Mention de la délivrance du brevet:
**12.06.91 Bulletin 91/24**

(84) Etats contractants désignés:
**BE DE FR GB NL**

(56) Documents cités:
**EP-A- 0 077 110**
**FR-A- 2 289 116**
**GB-A- 2 088 181**
**US-A- 1 583 619**

(73) Titulaire: **BERTHOUD S.A., Société anonyme dite**
**Boite Postale 36**
**F-69823 Belleville sur Saône Cédex(FR)**

(72) Inventeur: **Zanghelli, Patrick**
**11, rue du 11 Novembre**
**F-69220 Belleville(FR)**

(74) Mandataire: **de Boisse, Louis Arnaud et al**
**CABINET de BOISSE 37, Avenue Franklin D. Roosevelt**
**F-75008 Paris(FR)**

## Description

On a décrit dans le brevet US-A-1 583 619 un dispositif d'épandage de liquides phytosanitaires comportant une rampe supportée par le châssis d'un engin porteur au moyen de deux jeux de deux biellettes, les biellettes de chaque jeu étant disposées verticalement l'une à la suite de l'autre. Ces doubles-biellettes, parallèles entre elles entre leurs points d'articulation, respectivement au châssis et à la rampe, constituent un quadrilataire déformable permettant les déplacements transversaux de cette rampe, de telle sorte que celle-ci reste parallèle à l'axe des roues, si bien qu'elle demeure en gros parallèle au sol lors des déplacements de l'engin porteur.

Toutefois, bien que ce système permette d'amortir des oscillations et de garder à la rampe son parallélisme avec le sol, il ne donne pas entière satisfaction lors des cahots de l'engin porteur qui sont communiqués à la rampe, par exemple quand l'une des roues de cet engin tombe dans un trou.

C'est ainsi qu'avec une telle suspension, Les chocs angulaires communiqués à la rampe sont très longs à s'amortir et entraînent un épandage défectueux. On perd ainsi des quantités non négligeables de liquide, de telle sorte qu'on augmente d'autant le prix de revient du traitement.

On connaît aussi, par le BULLETIN S.F.M. édité par La Société Française des Mécaniciens, PARIS, décémbre 1951, No 3, pages 33 à 34 "Locomotives électriques à grande vitesse et à adhérence totale" par G. BORGEAUD, un système de suspension de la caisse des locomotives électriques à grande vitesse par rapport aux bogies, comportant deux biellettes dettes divergentes qui permettent d'amortir les oscillations de la caisse par rapport auxdits bogies.

L'application d'un tel système à une rampe de pulvérisation de liquides phytosanitaires monté sur un engin porteur ne donne pas satisfaction, car on n'arrive pas à amortir rapidement les oscillations de cette rampe.

D'après le document GB-A-2088181 il est connu un dispositif de suspension d'une rampe d'épandage de liquides phytosanitaires par rapport à un chariot déplaçable relativement à un cadre supporté par un engin porteur et constitué par deux ensembles disposés symétriquement par rapport au centre de la rampe et comprenant chacun une biellette pivotant sur le cadre par l'une de ses extrémités et un palonnier dont l'extrémité de sa branche orientée vers le centre est articulée à la seconde extrémité de la biellette.

Les perfectionnements qui font l'objet de la présente invention visent à remédier aux inconvénients précités et à permettre la réalisation d'un dispositif de suspension de rampe de pulvérisation qui, en dehors de sa faculté de maintenir la rampe parallèlement au sol lorsque l'engin porteur se déplace sur un sol en dévers, assure un amortissement très rapide des mouvements de la rampe qui lui sont communiqués par une oscillation brutale de l'engin porteur.

Le dispositif de suspension de rampe d'épandage de liquides phytosanitaires selon l'invention est caractérisé en ce que chaque ensemble comprend, outre les caractéristiques mentionnées dans la première partie de la revendication 1, les particularités suivantes:

- le palonnier a une forme coudée dont le sommet est monté basculant par rapport à la rampe;
- et chaque ensemble comprend un ressort de traction dont les bouts sont accrochés respectivement à la biellette et à l'extrémité de la seconde branche du palonnier tournée vers l'extérieur.

Le dessin annexé, donné à titre d'exemple, permettra de mieux comprendre L'invention, les caractéristiques qu'elle présente et les avantages qu'elle est susceptible de procurer :

Fig. 1 est une vue par l'arrière d'un engin porteur d'une rampe de pulvérisation comportant un dispositif de suspension suivant L'invention.

Fig. 2 illustre la manière dont le dispositif de suspension fonctionne lors d'un déplacement de l'engin porteur sur un terrain en dévers.

Fig. 3 montre comment est amorti un choc angulaire communiqué à la rampe de pulvérisation par l'engin porteur.

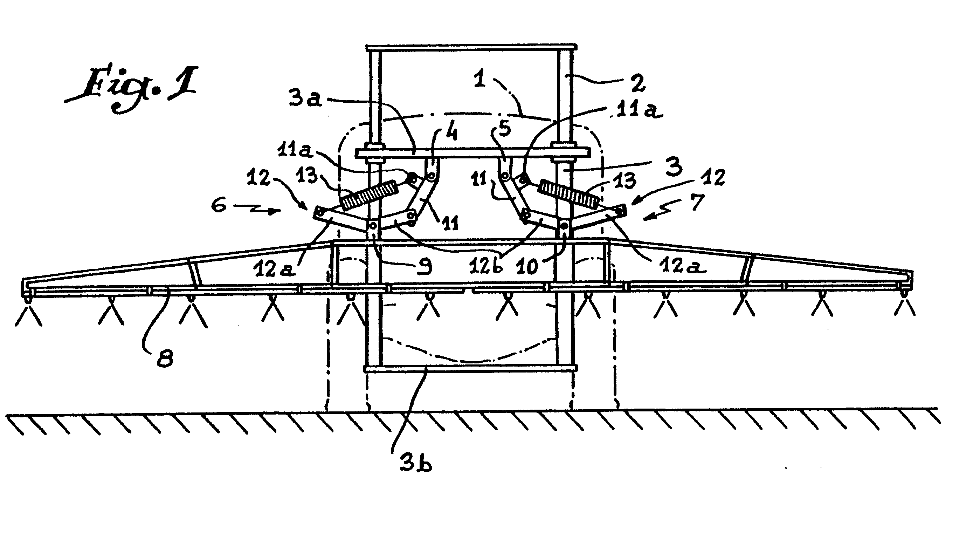

On a illustré en fig. 1 un engin porteur 1 pourvu à sa partie arrière d'un cadre fixe 2 dont les montants verticaux constituent des glissières pour un chariot 3 comportant essentiellement deux traverses horizontales 3a, 3b. Symétriquement par rapport au milieu de la traverse supérieure 3a, cette dernière comporte deux chapes 4, 5 orientées vers le bas et qui servent de pivot aux deux éléments 6, 7 symétriques qui constituent le dispositif suivant l'invention. Celui-ci est destiné à suspendre une rampe de pulvérisation 8 qui porte sur la membrure supérieure de sa poutre deux pattes 9, 10 chacune réunie à une chape 4, respectivement 5 de la traverse 3a par l'un des éléments précités.

Chacun de ceux-ci comprend tout d'abord une biellette 11 dont l'une des extrémités est articulée à la chape correspondante 4, 5. Chaque élément 6, 7 comporte encore un palonnier 12 comportant deux branches 12a, 12b déterminant entre elles un angle obtus et dont le sommet est monté à pivotement par rapport à la patte 9, respectivement 10, de la rampe 8. La branche 12b qui est orientée vers l'intérieur est plus courte que l'autre 12a, et son extrémité est montée à pivotement par rapport à l'extrémité de la bielle 11 opposée à celle qui est articulée à la chape 4, 5. On observe que chaque biellette 11 est pourvue, à proximité de son extrémité articulée à la traverse 3a du chariot 3, d'une oreille 11a orientée vers l'extérieur dans le montage illustré et à laquelle est attachée l'un des bouts d'un ressort de traction 13 dont l'autre bout est accroché à l'extrémité libre de la branche 12a du palonnier 12 qui est orientée vers l'extérieur.

Pour fixer les idées et de manière non limitative, l'entraxe de la biellette 11 est fixé dans un exemple de réalisation préféré à une valeur de 154mm., tandis que la longueur, toujours entre axes de pivotement, des branches 12a, 12b du palonnier 12 est respectivement de 117 et 185mm.

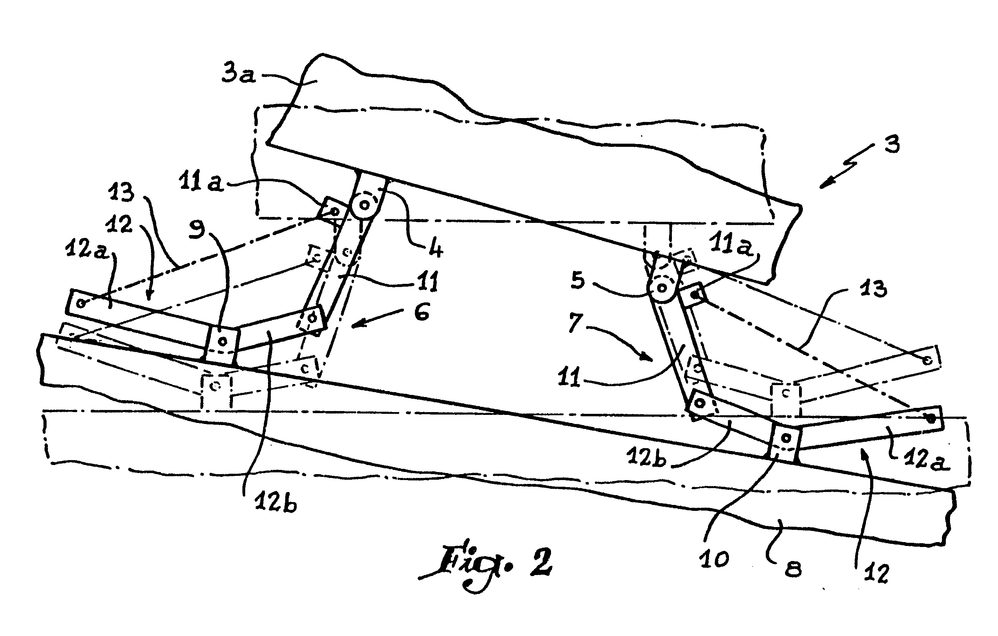

On a illustré en fig. 2 la position prise par la rampe 8 lorsque l'engin porteur 1 roule sur un terrain en dévers, c'est-à-dire que son essieu se trouve oblique par rapport à l'horizontale. Dans ces conditions, la traverse 3a du chariot se trouve parallèle au sol dans la position illustrée en traits pleins en fig. 2, alors que la rampe et le dispositif de suspension ont été illustrés en traits discontinus lorsque l'engin porteur se trouve sur un sol horizontal. On observe que la rampe s'incline comme la traverse 3a, mais d'un angle moindre du fait de la divergence des deux éléments constituant la suspension suivant l'invention. Autrement dit, dans ce cas, les ressorts 13, représentés par un simple trait d'axe, n'interviennent pratiquement pas et l'on se retrouve avec une suspension du genre de celle décrite dans le bulletin de la Société Française des Mécaniciens cité au début des présentes. Il va de soi que ce fonctionnement se retrouve aussi dans le cas ou l'engin porteur roule avec ses deux roues latérales disposées d'un même côté dans le fond d'un sillon, tandis que les deux autres roues roulent sur un sol situé plus haut que le fond de ce sillon.

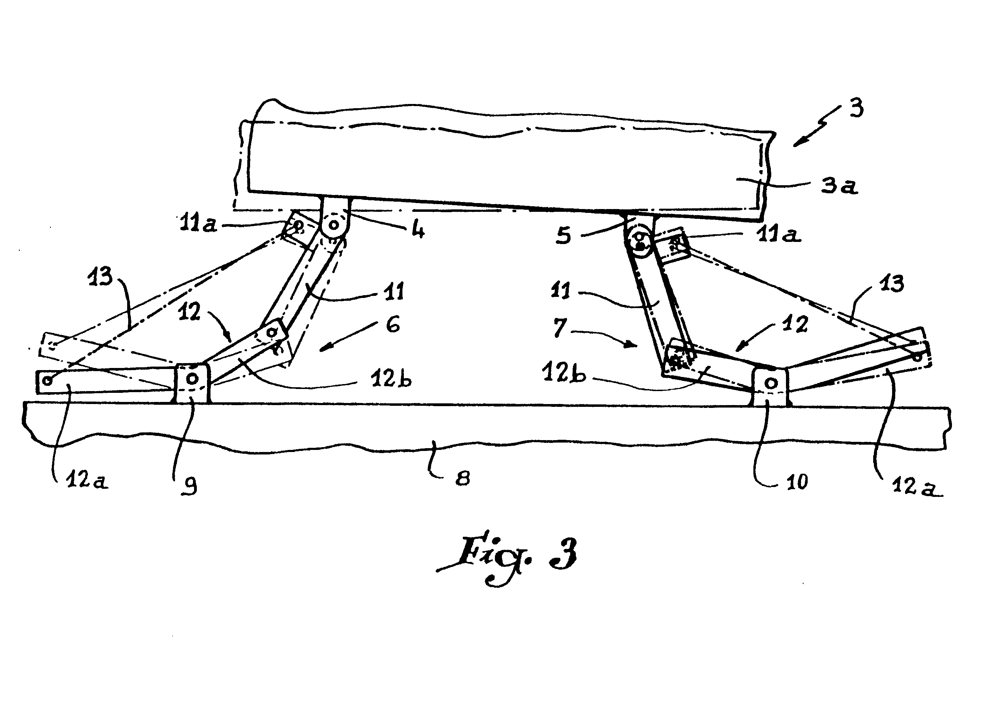

Si l'une des roues de l'engin porteur 1 rencontre un obstacle en relief ou tombe dans un trou, ce mouvement brusque est transmis au cadre 2 et à la traverse 3a. Mais, du fait de la présence du dispositif de suspension suivant l'invention, l'amortissement de la rampe est extrêmement rapide du fait :
- de l'inertie de la rampe et des ressorts car la distance entre la chape 4 et la patte 9 s'allonge (dans l'exemple illustré en fig. 3), le ressort correspondant 13 s'étendant, tandis que la distance entre la chape 5 et la patte 10 se raccourcit, variation qui est autorisée par une diminution de longueur dudit ressort 13. Bien entendu, ce changement de longueur du ressort est possible du fait qu'au repos, les ressorts sont déjà sous tension, c'est-à-dire que leurs spires ne sont pas jointives. Si l'effort n'est pas suffisant pour déformer la longueur des ressorts, tout se passe comme si la rampe était suspendue à la traverse 3a par des biellettes divergentes, comme illustré dans le bulletin de la Société Française des Mécaniciens. Dans ce cas, la rampe n'oscille pas d'un angle aussi important que le cadre 2 et elle se déplace un peu latéralement.

On a ainsi réalisé un système de suspension d'une rampe d'épandage de liquides phytosanitaires qui peut présenter une très grande longueur (de l'ordre de 35 à 50 mètres) et dont les oscillations dues à de brusques changements d'orientation de l'engin porteur sont très vite amorties, tandis que la rampe demeure pratiquement parallèle au sol dans toutes les positions dudit engin.

En particulier, l'oreille 11a de chaque biellette 11 pourrait être supprimée, le bout correspondant de chaque ressort 13 étant accroché directement à ladite biellette.

**Revendications**

1. Dispositif de suspension d'une rampe (8) d'épandage de liquides phytosanitaires par rapport à un chariot (3) déplaçable par rapport à un cadre (2) supporté par un engin porteur (1) et constitué par deux ensembles (6,7) disposés symétriquement par rapport au centre de la rampe et comportant chacun une biellette (11) pivotant par rapport au cadre (2) par l'une de ses extrémités et un palonnier (12) dont l'extrémité de sa branche orientée vers le centre est articulée a la seconde extrémité de la biellette (11), caractérisé en ce que :
   - le palonnier (12) a une forme coudée dont le sommet est monté basculant par rapport à la rampe (8);
   - et chaque ensemble comprend un ressort de traction (13) dont les bouts sont accrochés respectivement à la biellette (11) et à l'extrémité de la seconde branche (12a) du palonnier (12) tournée vers l'extérieur.

2. Dispositif suivant la revendication 1, caractérisé en ce que chaque biellette (11) comporte une oreille (11a) s'étendant vers l'extérieur et placée à proximité de son extrémité articulée à la traverse (3a) du chariot (3).

3. Dispositif suivant la revendication 2, caractérisé en ce que les branches de chaque palonnier sont dissymétrique, , celle (12b) reliée à la biellette étant t plus courte que l'autre (12a).

4. Dispositif suivant la revendication 3, caractérisé en ce que la branche la plus longue (12a) du palonnier (12) se trouve à l'extérieur r par rapport à son pivot (9) sur la rampe (8).

5. Dispositif suivant la revendication 3, caractérisé en ce que la longueur de la biellette (11), est intermédiaire entre celles des deux branches (12a, 12b) du palonnier (12).

## Claims

1. Device for the suspension of a boom (8) for applying phytosanitary liquids relative to a carriage (3) which is displaceable relative to a frame (2) supported by a carrier machine (1) and consisting of two assemblies (6, 7) disposed symmetrically relative to the centre of the boom and each comprising a link (11) pivoting relative to the frame (2) by one of its ends and a control rod (12) of which the end of its branch orientated toward the centre is articulated to the second end of the link (11), characterised in that the control rod (12) has an angled shape of which the vertex is mounted so as to rock relative to the boom (8), and each assembly comprises a draw spring (13) of which the ends are respectively attached to the link (11) and to the end of the second branch (12a) of the control rod (12) turned toward the exterior.

2. Device according to claim 1, characterised in that each link (11) comprises a lug (11a) extending toward the exterior and placed in the proximity of its end articulated to the cross member (3a) of the carriage (3).

3. Device according to claim 2, characterised in that the branches of each control rod are asymmetrical, the branch (12b) connected to the link being shorter than the other one (12a).

4. Device according to claim 3, characterised in that the longer branch (12a) of the control rod (12) is located at the exterior relative to its pivot (9) on the boom (8).

5. Device according to claim 3, characterised in that the length of the link (11) is intermediate between those of the two branches (12a, 12b) of the control rod (12).

## Ansprüche

1. Vorrichtung zum Aufhängen eines Spritzgestänges (8) für Pflanzenschutzmittel bezüglich eines Wagens (3), der bezüglich eines Rahmens (2) verschiebbar ist, welcher von einer Tragmaschine (1) abgestützt und von zwei Einheiten (6, 7) gebildet wird, die bezüglich der Mitte des Gestänges symmetrisch angeordnet sind und jeweils einen Lenker (11) und einen Hebel (12) aufweisen, von denen der Lenker bezüglich des Rahmens (2) mit einem seiner Enden schwenkbar ist und das Ende des zur Mitte gerichteten Armes des Hebels an dem zweiten Ende des Lenkers (11) angelenkt ist, dadurch gekennzeichnet, daß:

der Hebel (12) eine abgewinkelte Form hat, deren Scheitel bezüglich des Gestänges (8) schwenkbar gelangert ist;

und jede Einheit eine Zugfeder (13) aufweist, deren Enden an dem Lenker (11) bzw. am Ende des nach außen gerichteten zweiten Armes (12a) des Hebels (12) angebracht sind.

2. Vorrichtung nach Anspruch 1, dadurch gekennzeichnet, daß Jeder Lenker (11) ein Auge (11a) aufweist, das sich nach außen erstreckt und in der Nähe seines am Quergestänge (3a) des Wagens (3) angelenkten Endes angeordnet ist.

3. Vorrichtung nach Anspruch 2, dadurch gekennzeichnet, daß die Arme Jedes Hebels asymmetrisch sind, wobei der am Lenker angebrachte Arm (12b) kürzer als der andere (12a) ist.

4. Vorrichtung nach Anspruch 3, dadurch gekennzeichnet, daß der längere Arm (12a) des Hebels (12) sich auf der Außenseite bezüglich seines Anlenkpunktes (9) am Gestänge (8) befindet.

5. Vorrichtung nach Anspruch 3, dadurch gekennzeichnet, daß die Länge des Lenkers (11) zwischen denen der beiden Arme (12a, 12b) des Hebels (12) liegt.

Fig. 1

Fig. 2

EP 0 249 570 B1

*Fig. 3*

EP 0 249 570 B1